# EUROPÄISCHE PATENTSCHRIFT

(11) **EP 0 535 562 B1**
(45) Veröffentlichungstag und Bekanntmachung des Hinweises auf die Patenterteilung: **26.08.1998**
(21) Anmeldenummer: 92116504.9
(22) Anmeldetag: 26.09.1992
(51) Int. Cl.: H04M 1/00, H04Q 11/04

(54) **Teilnehmerendgerät für ISDN-Netze**
Subscriber terminal for ISDN networks
Terminal d'abonné pour réseaux RNIS

(30) Priorität: 03.10.1991 DE 4132872; 29.08.1992 DE 4228801
(43) Veröffentlichungstag der Anmeldung: 07.04.1993
(73) Patentinhaber: ALCATEL ALSTHOM COMPAGNIE GENERALE D'ELECTRICITE, 75008 Paris (FR)
(72) Erfinder: Bergler, Frank, W-7532 Niefern (DE); Mauch, Adrian, W-7000 Stuttgart 1 (DE); Hellenschmidt, Holger, W-7062 Rudersberg (DE)
(74) Vertreter: Knecht, Ulrich Karl, Dipl.-Ing.

(56) Entgegenhaltungen:
- EP-A- 349 346
- EP-A- 374 828
- GB-A- 2 189 968
- US-A- 4 330 886
- US-A- 5 036 513
- IEEE TRANSACTIONS ON CONSUMER ELECTRONICS Bd. 36, Nr. 3, August 1990, NEW YORK US Seiten 753 - 757 NAGANAWA, GOMI, MATSUI, NISHINO 'A study of audio communication devices for ISDN'
- PHILIPS TELECOMMUNICATION REVIEW Bd. 48, Nr. 4, Dezember 1990, HILVERSUM NL Seiten 28 - 35 B. BESSELSEN, R. DE SNAIJER 'The digital terminal adapters SOPHO-LAM S375/P375 and TA375'

## Beschreibung

Die vorliegende Erfindung bezieht sich auf ein Teilnehmerendgerät für ISDN-Netze in Form eines ISDN-Telefonapparates, mit mindestens einem Tastenfeld, mit einem Display, mit einer Anschlußbuchse für mindestens ein weiteres Applicationsterminal, und mit einer integrierten Schnittstelle für Kommunikation zwischen dem anzuschließenden Applicationsterminal und dem ISDN-Netz.

So ein ISDN-Telefonapparat ist bekannt aus EP-A-374 828. In der Patentanmeldung wird ein Telefonapparat beschrieben, der sich zwischen einem Telefonnetz und einem PC befindet.

Das bekannte Teilnehmerendgerät ist nachteilig, inter alia, weil das Applicationsterminal ständig betriebsbereit sein muß.

Ferner wird im EP-A-349 346 ein Gerät beschrieben, mit dem zwei simultane Bildkommunikationen und/oder Sprachkommunikationen möglich sind.

Aufgabe der vorliegenden Erfindung ist es deshalb, inter alia, ein Teilnehmerendgerät der eingangs genannten Art zu schaffen, bei dem das Applicationsterminal nicht ständig betriebsbereit sein muß.

Zur Lösung dieser Aufgabe ist das erfindungsgemäße Teilnehmerendgerät dadurch gekennzeichnet, daß das Teilnehmerendgerät mit einem Zwischenspeicher für Speicherung mindestens einer für ein nicht betriebsbereites Applicationsterminal bestimmten Information versehen ist und daß die Schittstelle eine Steuervorrichtung für unmittelbare Kommunikation zwischen dem anzuschließenden Applicationsterminal und dem ISDN-Netz ohne Benutzung des Zwischenspeichers aufweist.

Durch die erfindungsgemäßen Maßnahmen braucht das Applicationsterminal nicht ständig betriebsbereit zu sein, weil der Zwischenspeicher die für ein nicht betriebsbereites Applicationsterminal bestimmten Informationen speichern kann und, zum Beispiel, die für ein nicht betriebsbereites ISDN-Netz bestimmte Information speichern kann. Die Steuervorrichtung für unmittelbare Kommunikation zwischen dem anzuschließenden Applicationsterminal und dem ISDN-Netz ohne Benutzung des Zwischenspeichers bietet die Möglichkeit, das Applicationsterminal so zu steuern und zu organisieren, daß die unmittelbare Kommunikation, d.h. ohne Zwischenspeicher, auch im Dialogbetrieb möglich ist.

Ein erstes Ausführungsbeispiel des Teilnehmerendgeräts vorliegender Erfindung ist dadurch gekennzeichnet, daß die Steuervorrichtung für Fernsteuerung mindestens einer Funktion des ISDN-Telefonapparates angeordnet ist.

Ein zweites Ausführungsbeispiel des Teilnehmerendgeräts vorliegender Erfindung ist dadurch gekennzeichnet, daß die Schnittstelle einen Telematik-Server aufweist.

Der Telematik-Server stellt zum Beispiel einen Programmteil dar zur Organisierung und Abarbeitung des B- und D-Kanals des ISDN-Netzes. Mit dem Telematik-Server wird ein 'store-and-forward' Betrieb zur schnellen Überwachung über das ISDN-Netz und zur langsameren Kommunikation zwischen Telefon und beispielsweise PC möglich.

Ein drittes Ausführungsbeispiel des Teilnehmerendgeräts vorliegender Erfindung ist dadurch gekennzeichnet, daß der Zwischenspeicher einen Sende- und Empfangsbereich aufweist, dessen Empfangsbereiche von dem Telematik-Server organisiert sind.

Separate Speicherbereiche können separat organisiert werden.

Ein viertes Ausführungsbeispiel des Teilnehmerendgeräts vorliegender Erfindung ist dadurch gekennzeichnet, daß die Schnittstelle einen dienstunabhängigen Schnittstellenbereich aufweist.

Falls der Telematik-Server über den dienstunabhängigen Schnittstellenbereich mit beispielsweise dem APPLI/COM-Protocol angesprochen wird, werden die Envelopdatei zur Kommunikationssteuerung und die Dokumentdatei jeweils vom PC/Host and Telefon bzw. umgekehrt übertragen. Dies bedeutet, daß sowohl der Sende- als auch Empfangszwischenspeicher von diesem Schnittstellenbereich unmittelbar angesprochen werden kann und daß diese Speicherbereiche organisiert werden können. Darüber hinaus wird hierdurch die Kompatibilität in der Auftragsbeschreibung und den Documentenformen zwischen der Kommunikations-Software und den Anwendungsprogrammen hergestellt, so daß eine Kommunikation von Applicationsterminal zu Applicationsterminal betrieben werden kann, ohne daß die Informationsaufbereitung oder die Handhabung durch den Bediener erfolgen muß.

Ein fünftes Ausführungsbeispiel des Teilnehmerendgeräts vorliegender Erfindung ist dadurch gekennzeichnet, daß das Teilnehmerendgerät mit einem Schalter zum Wahlweisen zuschalten des Telematik-Servers, des diensteunabhängigen Schnittstellenbereichs oder der Steuervorrichtung versehen ist.

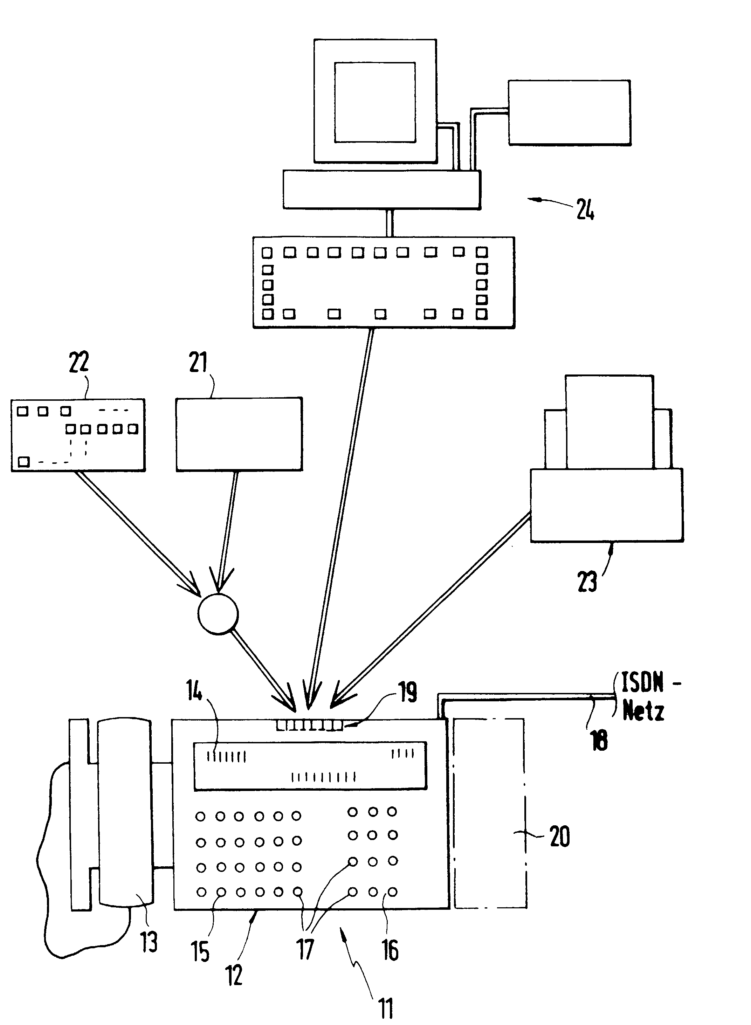

Die einzige Figur zeigt in schematischer Darstellung die Applikationsmöglichkeiten eines Teilnehmerendgerätes für ISDN-Netze in Form eines ISDN-Telefonapparates gemäß vorliegender Erfindung.

Gemäß der schematischen Zeichnung ist ein zum Anschluß an das ISDN-Netz geeignetes Teilnehmerendgerät in Form eines ISDN-Telefonapparates 11 schematisch dargestellt. Dieser ISDN-Telefonapparat 11 besitzt ein Gehäuse 12 mit einem beispielsweise seitlich aufliegendem Telefonhörer 13, mit einem alphanumerischen Display 14 und zwei Gruppen 15 und 16 mit alphanumerischen und Symboltasten 17. Der ISDN-Telefonapparat 16 ist ferner mit einem Anschlußkabel 18 zum Anschluß an das ISDN-Netz und außerdem mit mindestens einer Anschlußbuchse 19 für externe Applikationsterminals, wie sie im weiteren noch bezeichnet werden, versehen.

Der ISDN-Telefonapparat 11 ist derart ausgestattet, daß eines oder mehrere Applikationsterminals, wie ein Drucker 21 oder eine externe Tastatur 22 oder einem Telefaxgerät 23, oder ein Textverarbeitungssystem, beispielsweise ein büroüblicher PC 24, eine Workstation oder dergleichen über ihn kommunikationsfähig gemacht werden können, ohne daß das oder die betreffenden Applikationsterminals mit besonderen Kommunikationsbausteinen (Hardware und Software) und Datenfernschaltgeräten versehen werden müssen. Gemäß dem in der Zeichnung dargestellten Ausführungsbeispiel umfaßt der PC 24 neben einer Laufwerkstation, einer Eingabetastatur und einem Bildschirm auch einen Drucker und einem Scanner, so daß er sowohl für textorientierte Dienste (Teletex, Telex) als auch für graphikorientierte Dienste (Telefax) über den Telefonapparat 11 auf dem ISDN-Netz einsetzbar ist.

In den ISDN-Telefonapparat 11 ist zu diesem Zweck eine Schnittstelle (Hardware und Software) integriert, mit der die Kommunikationsfähigkeit zwischen dem anzuschließenden Applikationsterminal 21, 22 oder 24 und dem ISDN-Netz hergestellt werden kann. Dabei ist die Schnittstelle entweder, wie sich aus der Zeichnung ergibt, in dem Apparategehäuse 12 eingebaut, oder es ist, wie strichpunktiert dargestellt, in einem lösbar verbundenen Zusatzgehäuse 20 untergebracht. Das anzuschließende Applikationsterminal ist für sich gesehen kein Kommunikationsterminal; dazu wird es erst durch die in den ISDN-Telefonapparat integrierte Schnittstelle und deren Zuordnung.

Die zwischen den Applikationsteil im betreffenden Applikationsterminal und dem Kommunikationsteil im ISDN-Telefonapparat 11 in diesen integrierte Schnittstelle besitzt einen sogenannten Telematik-Server, der einen Programmteil darstellt, welcher (nach dem OSI-Referenzmodell) oberhalb der Schicht 3, d.h. in den Schichten 4 bis 7 eingebracht ist, in denen normalerweise der D- und B-Kanal des ISDN-Netzes organisiert und abgearbeitet wird. Dieses Programmteil bzw. dieser Telematik-Server, der für eine einfache Schnittstellenspezifikation in der Schicht 7 arbeitet, ist derart ausgebildet, daß wie es bei einem ersten Ausführungsbeispiel verwirklicht ist, dann, wenn mit der Anschlußbuchse 19 des ISDN-Telefonapparates 11 ein Drucker 21 und/oder eine Tastatur 22 verbunden ist, dieses bzw. diese Terminals mit dem ISDN-Netz über den ISDN-Telefonapparat 11 kommunikationsfähig ist bzw. sind. Zusätzlich ist dabei in den ISDN-Telefonapparat 11 ein Zwischenspeicher (als teil des Kommunikationsteils) integriert, der so groß ist, daß ankommende Nachrichten und zu sendende Nachrichten im ISDN-Telefonapparat 11 abgespeichert werden können. Das Speichern der ankommenden Nachrichten erfolgt bis zum Abruf der Nachrichten mit Hilfe des Druckers 21. Das Speichern der zu sendenden Nachrichten erfolgt in Form eines Puffers, mit dem Ziel, die Nachrichtenübertragung über das ISDN-Netz aus dem Zwischenspeicher heraus, also nicht unmittelbar vorzunehmen ("Store and Forward"-Betrieb). Durch Drucker 21 und Tastatur 22 sind einfache und preisgünstige Applikationsterminals geschaffen.

Bei diesem ersten Ausführungsbeispiel ist es auch möglich, die zu sendende Nachricht statt mit Hilfe einer externen Tastatur 22 mit Hilfe einer oder beider Gruppen 15, 16 von Tasten 17 einzugeben und die Eingabe am Display 14 sichtbar zu machen.

Gemäß einem anderen (zweiten) Ausführungsbeispiel ist die mit dem Telematik-Server versehene Schnittstelle im ISDN-Telefonapparat 11 durch einen diensteunabhängigen Schnittstellenbereich erweitert, und zwar in der Form, daß eine bestimmte Schnittstellenspezifikation in der Schicht 7 des Steuerungs-Kommunikationsteils des ISDN-Telefonapparates 11 vorgesehen ist. Diese Schnittstellenspezifikation ist beispielsweise die Telekommunikaitons-Schnittstelle APPLI/COM, wie sie durch eine Gemeinschaftsaktion der Deutschen Bundespost TELEKOM, der Arbeitsgemeinschaft Büro-Kommunikation und einigen Herstellen von Telekommunikationseinrichtungen standardisiert ist (vgl. die Broschüre "APPLI/COM, die standardisierte Telekommunikations-Schnittstelle", Version 1.0, Stand Juli 1990, Herausgeber: Deutsche Bundespost TELEKOM, Fernmeldetechnisches Zentralamt, Darmstadt). Diese Schnittstelle APPLI/COM ist zwischen Applikationsteil und Kommunikationsteil angesiedelt und ermöglicht die Kommunikationsfähigkeit unterschiedlicher Dienste, wie Teletex und Telex als seitenorientierter Kommunikationsdienst ebenso wie Telefax als graphikorientierter Kommunikationsdienst mit dem ISDN-Netz. Diese APPLI/COM-Schnittstellenspezifikation ermöglicht eine Organisation und Steuerung des Zwischenspeichers, der in einen Sendespeicherbereich und einen Empfangspeicherbereich im ISDN-Telefonapparat 11 aufgeteilt ist. Damit ist es möglich, nahezu beliebige Computer, wie PCs, Workstations und dergleichen mit dem ISDN-Telefonapparat 11 unmittelbar zu verbinden, ohne daß für beispielsweise den PC eine ISDN-Adapterkarte bzw. eine Steuerprogrammdiskette notwendig wäre, wobei jedoch vorausgesetzt ist, daß auf dem PC mit Hilfe eines beliebigen Editors die Dokumente erstellt und mit Hilfe eines beliebigen Kommunikationsprogramms (z.B. PROCOMM, ASYCOR) die Übertragung zwischen PC und ISDN-Telefonapparat durchgeführt werden.

Bei textorientierten Diensten, wie Teletex und Telex ist es kein Problem, den Zwischenspeicher im ISDN-Telefonapparate-Gehäuse 12 unterzubringen, da hierzu ein vergleichsweise kleiner Speicher notwendig ist, der es ermöglicht, daß der PC beispielsweise während des Nachtbetriebes abgeschaltet werden kann, so daß eingehende Nachrichten im stets betriebsbereiten ISDN-Telefonapparat 11 gespeichert werden können. Soll dem ISDN-Telefonapparat 11 eine Telefaxfunktion zugeordnet werden, so ist es aufgrund der Größe eines derartigen Speichers für den graphikorientierten Dienst möglich, diesen in dem o.g. Zusatzgehäuse 20 unterzubringen. In beiden Fällen ist es so, daß sowohl das Empfangen als auch das Senden mittels PC 24 sowohl für den Teletex- bzw. Telex- als auch für den Telefax-Dienst über den Zwischenspeicher im ISDN-Telefonapparat 11 erfolgt.

Gemäß einem weiteren (dritten) Ausführungsbeispiel ist der mit der APPLI/COM-Schnittstellenspezifikation versehene diensteunabhängige Schnittstellenbereich durch einen Schnittstellenbereich ersetzt, in den ein Steuerprogrammteil integriert ist, mit welchem die betreffenden Telefonfunktionen fernsteuerbar sind und mit denen Nachrichten unmittelbar auf das ISDN-Netz, also unter Umgehung des o.g. Zwischenspeichers gebracht werden können.

Als ein derartiges Steuerprogrammteil wird beispielsweise das sogenannte AT-Command-Set-Programm verwendet, wie es in der Druckschrift "Hayes Standard AT Command Set, Enhanced for ISDN, Release A, November 30, 1989, von Hayes Microcomputer Products, Inc., Atlanta , USA" beschrieben ist. Mit Hilfe dieser in den Schnittstellenbereich integrierten Steuervorrichtung ist ein direkter Zugriff zum ISDN-Netz über den ISDN-Telefonapparat 11 möglich. Dadurch kann die ISDN-Leitung sofort aufgebaut werden, ohne daß es hierzu eines Zwischenspeichers bedarf. Stattdessen wird in den ISDN-Telefonapparat 11 ein Modem integriert, daß das Steuerprogramm, beispielsweise in Form des AT-Command-Set versteht und auf diese Weise das betreffende Applikationsterminal für den betreffenden Dienst mit dem ISDN-Netz nicht nur kommunikationsfähig macht, sondern auch die wesentlichen Funktionen, wie Aufbauen der Verbindung, direkter Datenaustausch, Beenden der Verbindung und dergleichen organisiert und fernsteuert.

Für den sehr wichtigen Dienst Telefax enthält die Steuervorrichtung außer dem einen Steuerprogrammteil bildenden Hayes-kompatiblen Standard AT Command SET für ISDN einen erweiterten Steuerprogrammteil für den Telefaxdienst.

Dieser erweiterte Steuerprogrammteil führt eine bidirektionale Protokollumsetzung durch. Dabei wird von der Applikationsterminalseite, z.B. vom PC, ein zum Standard vorgeschlagenes Protokoll TIA/EIA-592 der Telecommunications Industry Association in ein Protokoll T.30 CCITT für den Übertragungsablauf mit einer Bildcodierung gemäß T.4 CCITT auf der ISDN-Netzseite umgesetzt. Das Protokoll TIA/EIA-592 entspricht dem Standards Proposal No. 2388-B Proposed New Standard "Asynchronous Facsimilie DCE Control Standard" der TIA vom 13. März 1992.

Zur näheren Erläuterung wird im folgenden für den Telefaxdienst der Austausch von zwei Telefaxseiten und zwar einmal für den Sendebetrieb und einmal für den Empfangsbetrieb anhand entsprechender Befehlstabellen erläutert.

Die Tabelle 1 zeigt den Ablauf für den Sendebetrieb. In der ersten Spalte sind die vom Applikationsterminal auszuführenden Befehle "DTE commands", mit DTE = Data Terminal Equipment, aufgeführt.

In der Spalte 2 sind die Antworten der Schnittstelle und in Spalte 3 die zugehörigen Aktionen zu entnehmen (Spalte 2 "DCE responses", Spalte 3 "Local DCE action", mit DCE = Data Circuit Equipment). Spalte 4 zeigt die notwendigen Aktionen der entfernten Station (Spalte 4, "Remote Station Action") und der Spalte 5 (Spalte 5, "Notes") sind noch ergänzende Bemerkungen zu entnehmen.

**TABELLE 1**

| Sendebetrieb | | | | |
|---|---|---|---|---|
| DTE commands | DCE responses | Local DCE action | Remote Station Action | Notes |
| AT+FCLASS=2.0 | OK | Set Class 2 | | |
| [AT+FLI="<local ID>"] | OK | Set local ID | | DTE may load a local ID |
| ATD<dial string> | | off hook, dial, | answer, | |
| | | send CNG | send [CED], | |
| | +FCO | detect flags | Preamble, | |
| | [+FNF:"<nsf>"] | [get NSF] | [NSF,] | |
| | [+FCI:"<csi>"] | [get CSI] | [CSI,] | |
| | {+FIS:<dis codes>} | get DIS | DIS | |
| | OK | | | |
| [AT+FNS="<hex NSS FIF string>"] | OK | | | DTE may respond to NSF frame |
| AT+FDT | | [send NSS,] | [get NSS, | if +FNS loaded |
| | | [send TSI,] | [get TSI,] | if +FLI loaded |
| | | send DCS | get DCS] | |
| | | send TCF | get TCF | |
| | {+FCS:<codes>} | get CFR | send CFR | |
| | CONNECT | send Carrier | get carrier | |
| <1st page data> | | send page data | get data | |
| <DLE><","> | | send RTC | get RTC | |
| | | send MPS | get MPS | |
| | OK | get MCF | send MCF | |
| AT+FDT | | send carrier | receive carrier | |
| | CONNECT | | | |
| <2nd page data> | | send 2nd page | get 2nd page | |
| <DLE><"."> | | send RTC | get RTC | |
| | | send EOP | get EOP | |
| | | get MCF | send MCF | |
| | +FHS:00 | send DCN | get DCN | |
| | OK | hangup | hangup | |

Wie aus der Tabelle 1 ausführlich hervor geht, wird zunächst vom Applikationsterminal eine Verbindung (Wählen = Dial) aufgebaut. Dann erfolgt ein Austausch von Parametern, wie z.B. Identität des rufenden/gerufenen Endgerätes und die Übertragungsgeschwindigkeit. Nach signalisierter Übertragungsbereitschaft erfolgt die Übertragung der einzelnen Telefaxseiten (FDT = Fax Data Transmission - Übertragung Fax Daten). Sodann wird die Verbindung wieder abgebaut.

In der folgenden Tabelle 2 ist der Ablauf für den Empfangsbetrieb gezeigt. Die Spalten 1 bis 5 entsprechen den Spalten 1 bis 5 der Tabelle 1. Im Empfangsbetrieb erfolgt der Verbindungsaufbau von Seiten der entfernten Station (Spalte 4, dial = wählen). Dann schließt sich der Parameteraustausch sowie die eigentliche Übertragung von zwei Telefaxseiten an (FDR - Fax Data Receive - Empfangen Fax Daten). Der genaue Befehlsablauf ist der Tabelle 2 zu entnehmen.

**TABELLE 2**

| Empfangsbetrieb | | | | |
|---|---|---|---|---|
| DTE commands | DCE responses | Local DCE action | Remote Station Action | Notes |
| | 2 ← | Detect ring ← | Dials[, send CNG] | |
| ATA | | off hook, | | |
| | | send CED, | get CED, | |
| | | send DIS, | get DIS, | |
| | | detect flags, | send Preamble, | |
| | +FCO | get DCS | send DCS, | |
| | 0 | begin TCF recv | start TCF | |
| AT+FDR | | accept TCF | finish TCF | |
| | | send CFR | get CFR | |
| | 1 | get carrier | send carrier | Receive 1 |
| <DC2> | <1st page data> | get page data | send page data | page doc |
| | <DLE><ETX> | get RTC | send RTC | |
| | +FPS:1,<lc>,0,0,0 | | | |
| | +FET:1 | get EOM | send EOM | |
| | 0 | | | |
| AT+FDR | | send MCF | get MCF | |
| | | send DIS | get DIS | restart |
| | | get DCS & TCF | send DCS & TCF | Phase B |
| | | send CFR | get CFR | |
| | 1 | get page carrier | send page carrier | |
| <DC2> | <page data stream> | get page data | send page data | |
| | <DLE><ETX> | get RTC | send RTC | |
| | +FPS:1,<lc>,0,0,0 | | | |
| | +FET:2 | get EOP | send EOP | |
| | 0 | | | |
| AT+FDR | | send MCF | get MCF, | |
| | +FHS:00 ← | get DCN ← | send DCN | |
| | 0 | hangup | hangup | |

Bei dem derzeitigen Telefaxdienst erfolgt auf der Applikationsterminalseite eine eindimensionale Huffmann-Codierung für eine Fax-G3-Format Übertragung.

Gemäß einer Weiterbildung der Erfindung ist es auch möglich, anstelle einer Huffmann-Codierung, direkt Daten in Form von Binärfiles zu übertragen. Dazu kann dann ein gemäß T.30 CCITT vorgesehener Fehlerkorrekturmodus verwendet werden.

Für den Telefax Gr. 3 Dienst kann auch gemäß einer weiteren Ausgestaltung der Erfindung, anstelle des üblichen Modulieren/Demodulieren der Daten, transparent, d.h. unmoduliert über einen B-Kanal mit 64 kbit/s übertragen werden.

Ferner ergibt sich als weiterer Vorteil des erfindungsgemäßen Teilnehmerendgerätes, daß aufgrund er ohnehin vorhandenen Displays auch jederzeit die für das jeweilige Applikationsterminal charakteristischen Parameter in form einer Statusanzeige erfolgen können. Insbesondere beim zuvor beschriebenen Telefaxdienst kann z.B. die Übertragungsgeschwindigkeit angezeigt werden.

Es ist auch möglich, den ISDN-Telefonapparat 11 mit mehr als einer Anschlußbuchse 19 für beispielsweise Teletex- und Telefax-Kommunikation über zwei getrennte Computer (PC oder andere Workstations) Geräte zu versehen.

In nicht dargestellter Weise ist der ISDN-Telefonapparat 11 mit einem Schalter versehen, mit dem je nach Integrations- bzw. Ausbaustufe des Telefonapparates 11 die unterschiedlichen Schnittstellenbereiche und damit die unterschiedlichen Möglichkeiten zugeschaltet werden können.

Wie sich aus dem Vorstehenden ergibt, ist keines der verwendeten Applikationsterminals ein dediziertes Kommunikationsterminal, sondern ein "normales", auf seinen ureigenen Betrieb abgestelltes Gerät, wie ein Computer (z.B. PC, übliche Workstations), Tastatur-Board oder Drucker. Auf die durch das ISDN-Netz gebotenen Kommunikationsdienste können die betreffenden Applikationsterminals ausschließlich dadurch zugreifen, daß die Funktionalität textund/oder graphikorientierten Kommunikation im ISDN-Telefonapparat integriert ist.

## Patentansprüche

1. Teilnehmerendgerät für ISDN-Netze in Form eines ISDN-Telefonapparates (11), mit mindestens einem Tastenfeld (15,16), mit einem Display (14), mit einer Anschlußbuchse (19) für mindestens ein weiteres Applicationsterminal (21-24), und mit einer integrierten Schnittstelle für Kommunikation zwischen dem anzuschließenden Applicationsterminal (21-24) und dem ISDN-Netz, dadurch gekennzeichnet, daß das Teilnehmerendgerät mit einem Zwischenspeicher für Speicherung mindestens einer für ein nicht betriebsbereites Applicationsterminal (21-24) bestimmten Information versehen ist und daß die Schnittstelle eine Steuervorrichtung für unmittelbare Kommunikation zwischen dem anzuschließenden Applicationsterminal (21-24) und dem ISDN-Netz ohne Benutzung des Zwischenspeichers aufweist.

2. Teilnehmerendgerät nach Anspruch 1, dadurch gekennzeichnet, daß die Steuervorrichtung für Fernsteuerung mindestens einer Funktion des ISDN-Telefonapparates (11) angeordnet ist.

3. Teilnehmerendgerät nach Anspruch 1 oder 2, dadurch gekennzeichnet, daß die Schnittstelle einen Telematik-Server aufweist.

4. Teilnehmerendgerät nach Anspruch 3, dadurch gekennzeichnet, daß der Zwischenspeicher einen Sende- und Empfangsbereich aufweist, dessen Empfangsbereiche von dem Telematik-Server organisiert sind.

5. Teilnehmerendgerät nach Anspruch 3 oder 4, dadurch gekennzeichnet, daß die Schnittstelle einen dienstunabhängigen Schnittstellenbereich aufweist.

6. Teilnehmerendgerät nach Anspruch 5, dadurch gekennzeichnet, daß das Teilnehmerendgerät mit einem Schalter zum Wahlweisen zuschalten des Telematik-Servers, des diensteunabhängigen Schnittstellenbereichs oder der Steuervorrichtung versehen ist.

## Claims

1. A subscriber terminal for ISDN networks in the form of an ISDN telephone set (11), with at least one keyboard (15, 16), with a display (14), with a connection socket (19) for at least one other applications terminal (21-24), and with an integrated interface for communication between the applications terminal (21-24) to be connected and the ISDN network, characterized in that the subscriber terminal is equipped with an intermediate memory for storing at least one information intended for an applications terminal (21-24) which is not on line, and that the interface has a control device for direct communication between the applications terminal (21-24) to be connected and the ISDN network, without using the intermediate memory.

2. A subscriber terminal as claimed in claim 1, characterized in that the control device is able to remotely control at least one function of the ISDN telephone set (11).

3. A subscriber terminal as claimed in claim 1 or 2, characterized in that the interface comprises a telematics server.

4. A subscriber terminal as claimed in claim 3, characterized in that the intermediate memory has a transmitting and a receiving area, where the receiving areas are organized by the telematics server.

5. A subscriber terminal as claimed in claim 3 or 4, characterized in that the interface contains a service-independent interface area.

6. A subscriber terminal as claimed in claim 5, characterized in that the subscriber terminal is provided with a switch for the selective connection of the telematics server, the service-independent interface area or the control device.

## Revendications

1. Terminal d'abonné pour réseaux RNIS sous la forme d'un appareil téléphonique RNIS (11), avec au moins un clavier (15, 16), avec un visuel (14), avec une douille de raccordement (19) pour au moins un autre terminal d'application (21-24), et avec une interface intégrée pour la communication entre le terminal d'application (21-24) à raccorder et le réseau RNIS, caractérisé en ce que le terminal d'abonné est équipé d'une mémoire intermédiaire pour le stockage d'au moins une information destinée à un terminal d'application (21-24) non opérationnel et en ce que l'interface présente un dispositif de commande pour la communication directe entre le terminal d'application (21-24) à raccorder et le réseau RNIS sans utiliser la mémoire intermédiaire.

2. Terminal d'abonné selon la revendication 1, caractérisé en ce que le dispositif de commande est disposé pour la télécommande d'au moins une fonction de l'appareil téléphonique RNIS (11).

3. Terminal d'abonné selon la revendication 1 ou 2, caractérisé en ce que l'interface présente un serveur de télématique.

4. Terminal d'abonné selon la revendication 3, caractérisé en ce que la mémoire intermédiaire présente une plage d'émission et une plage de réception, dont les plages de réception sont organisées par le serveur de télématique.

5. Terminal d'abonné selon la revendication 3 ou 4, caractérisé en ce que l'interface présente une plage interface indépendante du service.

6. Terminal d'abonné selon la revendication 5, caractérisé en ce que le terminal d'abonné est équipé d'un interrupteur pour la connexion optionnelle du serveur de télématique, de la plage interface indépendante du service ou du dispositif de commande.
